# FASCICULE DE BREVET EUROPEEN

(11) **EP 3 115 264 B1**
(45) Date de publication et mention de la délivrance du brevet: **08.11.2017**
(21) Numéro de dépôt: 16176677.9
(22) Date de dépôt: 28.06.2016
(51) Int. Cl.: B60R 21/017, B64D 11/06

(54) **AERONEF EQUIPE D'UN DISPOSITIF DE COMMANDE DU GONFLAGE D'UN BALLON GONFLABLE DE SECURITE ET PROCEDE ASSOCIE DE COMMANDE DU GONFLAGE D'UN BALLON GONFLABLE DE SECURITE**
LUFTFAHRZEUG MIT EINER STEUERVORRICHTUNG ZUM AUFBLASEN EINES AUFBLASBAREN SICHERHEITSBALLONS UND ENTSPRECHENDES STEUERVERFAHREN ZUM AUFBLASEN EINES AUFBLASBAREN SICHERHEITSBALLONS
AN AIRCRAFT HAVING AT LEAST ONE CONTROL DEVICE FOR CONTROLLING INFLATION OF AN INFLATABLE SAFETY BAG AND AN ASSOCIATED METHOD OF CONTROLLING INFLATION OF AN INFLATABLE SAFETY BAG

(30) Priorité: 08.07.2015 FR 1501443
(43) Date de publication de la demande: 11.01.2017
(73) Titulaire: Airbus Helicopters, 13725 Marignane Cedex (FR)
(72) Inventeur: SANTANA-GALLEGO, Tomas, 80339 München (DE)
(74) Mandataire: GPI & Associés

(56) Documents cités:
- EP-A1- 2 497 692
- WO-A1-99/15368
- DE-A1- 19 707 307

## Description

La présente invention concerne un aéronef équipé d'au moins un dispositif de commande du gonflage d'un ballon gonflable, couramment désigné par le terme anglais d'"airbag". Un tel dispositif est par ailleurs agencé au niveau d'un siège d'aéronef tel que par exemple un avion, un giravion ou encore plus particulièrement un hélicoptère. Ainsi, un tel dispositif permet de commander le gonflage d'un airbag agencé également au niveau du siège. En pratique, un tel airbag peut par exemple être agencé au niveau d'un harnais de sécurité permettant, notamment en cas d'accident, de maintenir en position un occupant de l'aéronef assis sur son siège.

Par suite, chacun des sièges de l'aéronef qui est équipé d'au moins un airbag peut comporter un dispositif de commande conforme à l'invention.

Par ailleurs, l'invention se rapporte également à un aéronef équipé d'un tel dispositif de commande et à un procédé de commande du gonflage d'un ballon gonflable de sécurité.

De façon connue, les dispositifs de commande du gonflage d'un ballon gonflable comportent des organes de commande comprenant des moyens de détection permettant de mesurer l'accélération de l'aéronef suivant au moins un axe et des moyens d'analyse permettant d'identifier l'imminence d'un accident de l'aéronef. De tels moyens d'analyse génèrent alors, si nécessaire, un ordre de commande de gonflage à un organe de gonflage pour procéder au gonflage du ou des ballons gonflables du siège de l'aéronef.

Cependant, de tels organes de commande nécessitent une alimentation en énergie électrique et sont consommateurs d'une quantité importante d'énergie électrique. Une telle consommation d'énergie électrique peut se révéler problématique lorsqu'il n'est généralement pas possible de connecter électriquement le dispositif de commande de chaque siège à une source centralisée d'énergie électrique produite par les moyens moteurs de l'aéronef.

Une telle configuration peut notamment se retrouver dans un aéronef lorsqu'il est problématique de faire circuler un faisceau électrique sous le plancher de l'aéronef. En effet, par exemple dans le cas des giravions en général et des hélicoptères en particulier, les réservoirs de stockage du carburant sont généralement directement agencés en dessous du plancher de la cabine et/ou du cockpit.

Le positionnement et le cheminement d'un faisceau électrique en dessous du plancher pour alimenter chacun des sièges de l'aéronef aurait alors pour conséquence une perte de volume de stockage pour le carburant et/ou de complexifier la forme et la fabrication des réservoirs de carburant.

De plus, pour alimenter chacun des dispositifs de commande via un faisceau électrique agencé en dessous du plancher de l'aéronef, il serait alors nécessaire de ménager dans le plancher une pluralité d'ouvertures pour permettre le passage des câbles électriques destinés à alimenter en énergie électrique les différents dispositifs de commande agencés au dessus du plancher. Une telle pluralité d'ouvertures aurait alors pour effet de fragiliser la structure du plancher de l'aéronef ce qui est problématique et obligerait vraisemblablement à en augmenter son épaisseur globale et donc sa masse.

Ainsi, afin d'éviter l'utilisation d'un faisceau électrique permettant l'alimentation en énergie électrique, il est alors possible d'utiliser, pour chacun des sièges, une source d'énergie électrique autonome telle une batterie.

De telles batteries sont alors constamment connectées électriquement aux organes de commande et aux organes de gonflage du ou des airbags. Il en résulte une importante consommation d'énergie électrique. Un tel agencement oblige alors à, soit utiliser de lourdes et volumineuses batteries avec une importante autonomie, soit effectuer des opérations de maintenance longues avec des intervalles entre deux opérations de maintenance rapprochées de manière, d'une part, à contrôler le niveau de charge des batteries et, d'autre part, procéder également à leur rechargement.

Par ailleurs tel que décrit dans le document WO 99/15368, il est également connu de réduire la consommation en électricité de l'organe de commande permettant de mesurer une accélération d'un aéronef en ne connectant la source d'énergie électrique avec le dispositif de commande que lorsque les boucles de la ceinture de sécurité sont connectées l'une à l'autre.

Cependant, une telle solution consomme de l'énergie électrique pour alimenter l'organe de commande dès que les ceintures de sécurité sont bouclées et pas uniquement lorsqu'une situation potentiellement dangereuse est identifiée par le dispositif de commande.

En outre, tel que décrit par le document EP 2 497 692 dans le domaine des airbags de volants pour véhicules automobiles, il est également connu d'utiliser un premier capteur mesurant en permanence une première accélération courante et un interrupteur pilotable en fonction de cette première accélération courante pour activer/désactiver l'organe de commande.

Dans ce cas, un premier capteur électrique basse tension permet de détecter constamment l'accélération du véhicule dans un mode de veille et un second capteur permet de détecter occasionnellement l'accélération du véhicule uniquement lorsqu'un risque d'accident est identifié correspondant à un mode opérationnel. Un tel mode de veille est réalisé dans le but d'économiser l'énergie électrique consommée par l'organe de commande d'un airbag lors de la mesure de l'accélération du véhicule automobile par le second capteur d'accélération.

Cependant dans ce cas, le retour du mode opérationnel au mode de veille, dans lequel seul le premier capteur est opérant, s'effectue après une durée prédéterminée. Une telle solution n'est alors pas optimale pour limiter la consommation électrique d'un tel système de commande lorsqu'aucun risque d'accident n'est détecté. En effet, cette solution se contente de rester dans le mode opérationnel pendant une durée prédéterminée qui est nécessairement beaucoup plus longue que l'occurrence d'un risque d'accident pour pouvoir le détecter.

En outre le document DE 197 07 307 décrit un autre dispositif de commande pour airbag de véhicules automobiles comprenant deux capteurs d'accélération constamment alimentés en énergie électrique. Un tel dispositif est donc particulièrement énergivore en électricité et n'est donc pas adapté pour une utilisation visant un dispositif de commande de gonflage agencé au niveau d'un siège d'aéronef.

La présente invention a alors pour objet de proposer un aéronef équipé d'au moins un dispositif de commande de gonflage d'un airbag et un procédé de commande de gonflage d'un airbag permettant de s'affranchir des limitations mentionnées ci-dessus. Une telle invention permet en effet de limiter la consommation électrique fournie par une source d'énergie aux organes de commande et de gonflage des airbags. Un tel avantage procuré par l'invention peut alors également avoir comme conséquence directe d'espacer les opérations de maintenance nécessaires au contrôle de la charge et/ou à la recharge des sources d'énergie électrique destinées à alimenter en énergie électrique de tels dispositifs de commande.

L'invention concerne donc un aéronef équipé d'au moins un dispositif de commande comportant au moins un organe de commande permettant de mesurer une accélération de l'aéronef, de générer un ordre de gonflage et de transmettre cet ordre de gonflage à un organe de gonflage. Un tel organe de gonflage permet de réaliser un gonflage d'au moins un ballon gonflable de sécurité.

En outre, le dispositif de commande ainsi que l'organe de gonflage et le ballon gonflable sont agencés au niveau d'un même siège de l'aéronef.

Ce dispositif de commande comporte au moins un système d'armement relié à l'organe de commande, le système d'armement comportant :
- au moins un premier capteur mesurant en permanence une première accélération courante de l'aéronef selon au moins un axe, l'organe de commande fournissant une mesure de l'accélération de l'aéronef indépendante de la première accélération courante de l'aéronef mesurée par le premier capteur, et
- au moins un interrupteur pilotable en fonction de la première accélération courante de l'aéronef mesurée par le premier capteur, un tel interrupteur pilotable permettant d'activer/de désactiver l'organe de commande en connectant/déconnectant électriquement une source d'énergie électrique à l'organe de commande.

Par organe de commande, on entend ainsi désigner au moins un organe permettant d'effectuer une autre mesure de l'accélération de l'aéronef distincte et indépendante de la première accélération courante de l'aéronef mesurée par le premier capteur.

La mesure de l'accélération de l'aéronef obtenue au moyen de l'organe de commande peut alors avantageusement présenter une caractéristique distinctive de celle obtenue au moyen du premier capteur. Une telle caractéristique distinctive peut selon un mode de réalisation particulier être choisie parmi le groupe comportant la rapidité, la fidélité, la sensibilité et la précision de la mesure d'accélération de l'aéronef.

Autrement dit, l'interrupteur pilotable du système d'armement permet de fermer un circuit d'alimentation en énergie électrique de l'organe de commande lorsqu'un risque d'accident est détecté par le premier capteur. Au contraire, lorsque l'aéronef est soumis à une accélération normale de fonctionnement, un tel circuit d'alimentation en énergie électrique est alors ouvert et l'organe de commande ne consomme pas d'énergie électrique.

Ainsi, la mesure de la première accélération courante de l'aéronef permet uniquement de commander l'interrupteur pilotable du système d'armement. Au contraire, la mesure de l'accélération de l'aéronef obtenue au moyen de l'organe de commande permet quant à elle notamment de commander le gonflage du ballon gonflable si certains seuils d'accélération sont dépassés.

Par conséquent, un tel premier capteur mesure en permanence, c'est à dire de façon continue, une première accélération courante de l'aéronef lors du vol et/ou du déplacement de l'aéronef.

Par opposition, l'organe de commande fournissant une mesure de l'accélération de l'aéronef n'effectue pas une telle mesure en permanence mais de façon intermittente, ou limitée dans le temps, uniquement lorsque la mesure de la première accélération courante de l'aéronef effectuée par le premier capteur permet d'identifier l'imminence d'un risque d'accident.

Par ailleurs, lorsque l'imminence d'un accident n'est plus détectée, l'organe de commande peut alors être désactivé pour éviter de continuer à consommer de l'énergie électrique inutilement. En outre, une telle imminence d'un risque d'accident peut alors être déterminée lorsque l'organe de commande comporte au moins un second capteur apte à mesurer, au moins temporairement, une seconde accélération courante de l'aéronef selon au moins un axe.

Un tel second capteur peut ainsi être du même type que celui du premier capteur. Cependant, comme déjà évoqué, un tel second capteur peut en pratique être choisi de façon à effectuer une mesure présentant une caractéristique distinctive par rapport à la mesure issue du premier capteur. En outre, une telle caractéristique distinctive peut consister en une plus grande précision, une plus grande rapidité, une plus grande fidélité ou encore une plus grande sensibilité. Un tel second capteur peut par ailleurs être de type actif et connecté électriquement à la source d'énergie électrique lorsque l'interrupteur pilotable est fermé.

Selon l'invention, cet aéronef est remarquable en ce que l'organe de commande comporte au moins un calculateur permettant de comparer la valeur absolue de la seconde accélération courante de l'aéronef avec un troisième seuil d'accélération et de commander l'ouverture de l'interrupteur pilotable pour déconnecter électriquement la source d'énergie électrique de l'organe de commande lorsque cette valeur absolue de la seconde accélération courante de l'aéronef est inférieure au troisième seuil d'accélération pendant un nombre prédéterminé d'itérations de comparaison, effectuées par le calculateur, entre la valeur absolue de la seconde accélération courante de l'aéronef et le troisième seuil d'accélération.

Un tel calculateur permet en outre de compter les itérations de comparaison de la valeur absolue de la seconde accélération courante de l'aéronef lorsqu'elle est inférieure au troisième seuil d'accélération. Ce décompte des itérations de comparaison peut par ailleurs être remis à zéro à chaque fois que la valeur absolue de la seconde accélération courante de l'aéronef repasse au dessus du troisième seuil d'accélération.

De cette manière, on peut contrôler l'alimentation en énergie électrique de l'organe de commande en comparant la seconde accélération courante de l'aéronef, dont la précision de mesure peut être supérieure à celle de la première accélération courante, au troisième seuil d'accélération.

Par ailleurs, un tel troisième seuil d'accélération peut, comme le deuxième seuil d'accélération, être proche de 1g par exemple. Ainsi, si la valeur absolue de la deuxième accélération courante de l'aéronef suivant au moins un axe est inférieure par exemple à 1g pendant 500 itérations de comparaison effectuées par le calculateur, ce dernier génère alors un ordre de commande et le transmet à l'interrupteur pilotable de manière à ouvrir l'alimentation en énergie électrique de l'organe de commande et ainsi à le désactiver.

Avantageusement, l'interrupteur pilotable peut connecter électriquement une source d'énergie électrique à l'organe de commande lorsque la valeur absolue de la première accélération courante de l'aéronef devient supérieure à un premier seuil d'accélération.

Ainsi selon une réalisation particulière de l'invention, l'interrupteur pilotable peut fermer automatiquement l'alimentation en énergie électrique de l'organe de commande en le connectant avec la source d'énergie électrique dès qu'un risque d'accident est détecté par le premier capteur correspondant à l'instant du dépassement d'un premier seuil d'accélération.

Selon une autre réalisation de l'invention, le risque d'accident peut également être détecté par le premier capteur si le dépassement d'un premier seuil d'accélération est maintenu pendant une durée prédéterminée par exemple de quelques millisecondes.

Typiquement, tant que la valeur absolue de l'accélération de l'aéronef dans un espace en trois dimensions autour de celui-ci reste inférieure au premier seuil d'accélération, tel que par exemple une accélération relative de 2g correspondant à deux fois l'accélération gravitationnelle terrestre g, l'organe de commande est désactivé. Une telle accélération relative est définie comme étant l'accélération de l'aéronef mesurée dans un référentiel mobile lié à l'aéronef de manière à exclure l'accélération gravitationnelle terrestre de sa valeur.

Par ailleurs, la source d'énergie électrique peut être une source d'énergie centrale de l'aéronef permettant d'alimenter plusieurs dispositifs de commande ou une source d'énergie autonome telle une batterie dédiée à un seul dispositif de commande.

En pratique, le système d'armement peut comporter des moyens d'amortissement de la première accélération courante de l'aéronef mesurée par le premier capteur, de tels moyens d'amortissement permettant de filtrer une mesure de la première accélération courante de l'aéronef, l'interrupteur pilotable connectant électriquement la source d'énergie électrique à l'organe de commande lorsque la mesure de la première accélération courante de l'aéronef est supérieure, en valeur absolue, au premier seuil d'accélération.

Ainsi, les moyens d'amortissement peuvent permettre de traiter ou de filtrer la mesure effectuée par le premier capteur pour éviter de déclencher l'activation de l'organe de commande par l'interrupteur pilotable. De tels moyens d'amortissement peuvent ainsi consister en un filtre passe-haut filtrant les variations d'accélérations trop lentes. Un tel mode de réalisation est avantageux pour filtrer les faibles variations d'accélérations telles des séquences de virages de l'aéronef à haut niveau d'accélération, qui peuvent atteindre relativement lentement 2g selon au moins un axe. Une telle durée représentative d'une variation lente de l'accélération de l'aéronef peut être notamment supérieure à 100 millisecondes. On peut ainsi éviter une activation intempestive de l'organe de commande puisqu'il n'y a alors pas de risque d'accident pour l'aéronef.

Par ailleurs, l'interrupteur pilotable peut également déconnecter électriquement la source d'énergie électrique de l'organe de commande lorsque la valeur absolue de la première accélération courante de l'aéronef est inférieure à un deuxième seuil d'accélération pendant une durée prédéterminée.

En d'autres termes, le deuxième seuil d'accélération est inférieur au premier seuil d'accélération et peut par exemple être de l'ordre de 1g. Ainsi, si la valeur absolue de la première accélération courante de l'aéronef suivant au moins un axe est inférieure par exemple à 1g pendant 500 millisecondes, on commande l'interrupteur pilotable de manière à désactiver l'organe de commande.

En pratique, le calculateur peut également comparer la valeur absolue de la seconde accélération courante de l'aéronef avec un quatrième seuil d'accélération ainsi que la valeur moyenne de la seconde accélération courante de l'aéronef sur un intervalle de temps prédéterminé avec un cinquième seuil d'accélération. Le calculateur peut alors générer l'ordre de gonflage puis le transférer à l'organe de gonflage lorsque, d'une part, la valeur absolue de la seconde accélération courante de l'aéronef est supérieure au quatrième seuil d'accélération et que, d'autre part, la valeur moyenne de la seconde accélération courante de l'aéronef sur cet intervalle de temps prédéterminé est supérieure au cinquième seuil d'accélération.

Autrement dit, tant que la valeur absolue de la seconde accélération courante de l'aéronef reste inférieure au quatrième seuil d'accélération et la valeur moyenne de la seconde accélération courante de l'aéronef sur un intervalle de temps prédéterminé reste inférieur au cinquième seuil d'accélération, l'organe de commande ne commande pas le gonflage de l'airbag du siège sur lequel il est agencé. Un tel calculateur permet en outre d'exécuter en parallèle une pluralité d'algorithmes permettant de mesurer et de comparer la seconde accélération courante de l'aéronef en translation et en rotation par rapport à trois axes orthogonaux entre eux définissant un référentiel lié à l'aéronef. En effet, une accélération peut être linaire et produite par un mouvement de translation ou angulaire et produite par un mouvement de rotation.

Par ailleurs, vectoriellement parlant, la seconde accélération courante de l'aéronef possède trois composantes vectorielles pures à chaque instant, c'est-à-dire orientées selon uniquement une direction parallèle à l'un des trois axes définissant le référentiel lié à l'aéronef et des composantes vectorielles combinées, c'est-à-dire orientées selon deux directions parallèles à l'un des trois axes définissant le référentiel lié à l'aéronef.

Ainsi, le calculateur permet à chaque instant de mettre en oeuvre plusieurs algorithmes en parallèle pour mesurer et comparer les composantes vectorielles pures de la seconde accélération courante de l'aéronef. Chaque algorithme mis en oeuvre par le calculateur peut alors utiliser comme données d'entrées l'une au moins des trois composantes vectorielles pures de la seconde accélération courante de l'aéronef. Dans le cas où chaque algorithme utilise uniquement une composante vectorielle pure, on parle alors de détection pure. En revanche dans le cas où chaque algorithme utilise simultanément des composantes vectorielles combinées, on parle alors de détection combinée.

La mesure et la comparaison des accélérations dites "pures" et "combinées" effectuées simultanément en parallèle par des algorithmes dédiés permettent ainsi au calculateur d'avoir une grande réactivité pour identifier, le cas échéant, un risque imminent d'accident.

Ainsi, lorsque le calculateur de l'organe de commande détecte que la valeur absolue de la seconde accélération courante de l'aéronef est supérieure au quatrième seuil d'accélération égal à par exemple 9g et que la valeur moyenne de la seconde accélération courante de l'aéronef est supérieure au cinquième seuil égal à par exemple 5g pendant 15ms, il génère et envoie un ordre de gonflage à un organe de gonflage permettant alors de réaliser un gonflage quasi instantané du ballon gonflable.

Selon un mode de réalisation particulier, l'organe de commande peut comporter au moins une mémoire permettant de stocker au moins des données représentatives des troisième et/ou quatrième et/ou cinquième seuils d'accélération.

Ainsi, une telle mémoire peut permettre de conserver les données représentatives des troisième, quatrième et cinquième seuils d'accélération entre deux missions ou pendant toute la durée d'utilisation de l'aéronef. Dans ce cas, chaque mémoire peut être paramétrée une fois lors de la fabrication du dispositif de commande avant son assemblage dans l'aéronef. En pratique, les troisième, quatrième et cinquième seuils d'accélération peuvent également être modifiés si nécessaire lors d'une opération de maintenance de l'aéronef.

Enfin selon un autre exemple de réalisation, les données contenues dans la mémoire peuvent être modifiées à chaque mission. Ainsi, les troisième, quatrième ou cinquième seuils d'accélération peuvent être changés avant une utilisation de l'aéronef pour répondre à des exigences de sécurité particulières à une mission. Les exigences de sécurité peuvent en effet varier par exemple si la mission est une mission de transport de personne ou une mission de test de l'aéronef dans lequel les capacités de l'aéronef, notamment d'accélération, sont évaluées.

Avantageusement, le premier capteur peut être formé par un capteur mécanique apte à mesurer une accélération selon au moins un axe.

En d'autres termes, le premier capteur comporte une masse mobile en translation ou en rotation et des moyens de rappel élastique destinés à s'opposer à une force d'inertie lors d'une accélération linaire ou angulaire du capteur selon au moins un axe.

De plus, un tel capteur mécanique présente des moyens annexes qui peuvent être par exemple optiques, magnétiques ou électriques pour mesurer le déplacement de la masse.

Par ailleurs selon un autre exemple de réalisation le premier capteur et le second capteur peuvent être choisis parmi le groupe comportant les microsystèmes électromécaniques (MEMs) et les nanosystèmes électromécaniques (NEMs) aptes à mesurer une accélération selon au moins un axe.

Dans ce cas, le premier capteur ainsi que le second capteur permettent de mesurer une accélération linaire ou angulaire selon au moins un axe en étant miniaturisés. Une tel miniaturisation est en outre avantageuse car elle permet de garantir une précision de mesure maximale quelque soit la direction de l'accélération.

En effet, de part la faible masse de leur masse mobile, de tels premier et second capteurs miniaturisés sont moins sensibles aux frottements internes que les capteurs mécaniques conventionnels dont le déplacement de la masse peut être soumis à des forces de frottement importantes en fonction de la direction de l'accélération de l'aéronef.

En pratique, le second capteur peut être saturé pour mesurer une accélération selon au moins un axe (X), (Y), (Z) uniquement en dessous d'un sixième seuil l'accélération choisi supérieur ou égal au quatrième seuil d'accélération.

Au dessus de ce sixième seuil l'accélération, l'accélération de l'aéronef n'est alors plus mesurée. Bien entendu, un tel sixième seuil est choisi supérieur ou égal au quatrième seuil d'accélération auquel on génère l'ordre de gonfler le ou les airbags du siège d'aéronef.

Une telle saturation d'un second capteur est en outre avantageuse car elle permet d'éviter un gonflage accidentel du ou des airbags. En effet, cette saturation du second capteur permet de ne pas détecter les fortes accélérations dues par exemple à des à-coups involontaires tels des coups de pied dans un siège ou des chocs entre un bagage et un siège.

En outre, l'invention se rapporte aussi à un procédé de commande du gonflage d'au moins un ballon gonflable de sécurité agencé au niveau d'au moins un siège d'aéronef. Un tel procédé de commande comporte au moins une étape de mesure consistant à mesurer une accélération de l'aéronef ainsi qu'une étape consistant à générer un ordre de gonflage et à transmettre cet ordre de gonflage à un organe de gonflage du ballon gonflable.

En outre, ce procédé comporte :
- une étape préliminaire de mesure mise en oeuvre par au moins un premier capteur, cette étape préliminaire de mesure consistant à mesurer en permanence une première accélération courante de l'aéronef selon au moins un axe, l'étape de mesure permettant quant à elle de fournir une mesure de l'accélération de l'aéronef indépendante de la première accélération courante de l'aéronef, et
- une étape d'activation et une étape de désactivation d'un organe de commande permettant de réaliser l'étape consistant à générer un ordre de gonflage et à transmettre cet ordre de gonflage à l'organe de gonflage du ballon gonflable, l'étape d'activation et l'étape de désactivation étant réalisées en connectant/déconnectant électriquement une source d'énergie électrique à l'organe de commande.

De telles étapes d'activation/de désactivation de l'organe de commande peuvent ainsi être effectuées de manière automatisée au moyen d'un interrupteur pilotable en fonction de la mesure de la première accélération courante de l'aéronef.

En outre, une telle étape de mesure est mise en oeuvre via l'organe de commande et permet de mesurer, au moins temporairement, une seconde accélération courante de l'aéronef selon au moins un axe.

De cette manière, l'organe de commande peut comporter un second capteur d'accélération. Un tel second capteur est avantageusement choisi plus rapide, plus précis ou plus fiable que le premier capteur d'accélération permettant de mesurer la première accélération courante de l'aéronef.

Selon l'invention un tel procédé est remarquable en ce qu'on compare la valeur absolue de la seconde accélération courante de l'aéronef avec un troisième seuil d'accélération et on commande l'ouverture de l'interrupteur pilotable pour déconnecter électriquement la source d'énergie électrique de l'organe de commande lorsque la valeur absolue de la seconde accélération courante de l'aéronef est inférieure au troisième seuil d'accélération pendant un nombre prédéterminé d'itérations de comparaison entre la valeur absolue de la seconde accélération courante de l'aéronef et le troisième seuil d'accélération.

En effet, lorsqu'on identifie que la valeur absolue de la seconde accélération courante passe en dessous du troisième seuil d'accélération, on est sûr que l'accélération de l'aéronef est revenue à un niveau stable et qu'un accident n'est pas imminent. On peut alors compter le nombre d'itérations de comparaison correspondant à des boucles de calcul dans un algorithme où la valeur absolue de la seconde accélération courante de l'aéronef est inférieure au troisième seuil d'accélération et couper l'alimentation en énergie électrique de l'organe de commande en ouvrant l'interrupteur pilotable du système d'armement lorsque le nombre d'itérations atteint le nombre prédéterminé d'itérations de comparaison.

Avantageusement, on peut alors comparer la valeur absolue de la première accélération courante de l'aéronef avec un premier seuil d'accélération et on peut connecter électriquement la source d'énergie électrique à l'organe de commande lorsque la valeur absolue de la première accélération courante de l'aéronef est supérieure au premier seuil d'accélération.

En d'autres termes, tant que la valeur absolue de la première accélération courante de l'aéronef est inférieure au premier seuil d'accélération, on laisse ouvert l'interrupteur pilotable. Lorsque la valeur absolue de la première accélération courante de l'aéronef dépasse le premier seuil d'accélération, on peut commander la fermeture de l'interrupteur pilotable et par conséquent l'activation de l'organe de commande connecté électriquement avec la source d'énergie électrique.

En pratique, on peut filtrer une mesure de la première accélération courante de l'aéronef et on peut comparer la mesure de la première accélération courante de l'aéronef avec le premier seuil d'accélération puis on peut connecter électriquement la source d'énergie électrique à l'organe de commande lorsque la mesure de la première accélération courante de l'aéronef est supérieure, en valeur absolue, au premier seuil d'accélération.

Autrement dit, tant que la première accélération courante de l'aéronef varie lentement, on filtre le signal et on laisse ouvert l'interrupteur pilotable. Lorsque la première accélération courante de l'aéronef varie plus rapidement, une mesure filtrée de la première accélération courante de l'aéronef est alors comparée avec le premier seuil d'accélération. Comme précédemment, lorsque cette mesure filtrée dépasse le premier seuil d'accélération, on commande la fermeture de l'interrupteur pilotable et par conséquent l'activation de l'organe de commande connecté électriquement avec la source d'énergie électrique.

Comme déjà évoqué précédemment, on peut également déconnecter électriquement la source d'énergie électrique de l'organe de commande lorsque la valeur absolue de la première accélération courante de l'aéronef est inférieure à un deuxième seuil d'accélération pendant une durée prédéterminée.

Ainsi dans ce cas, on compare la valeur absolue de la première accélération courante de l'aéronef avec un deuxième seuil d'accélération et si elle reste inférieure à ce deuxième seuil d'accélération pendant une durée prédéterminée, on ouvre l'interrupteur pilotable. De cette façon, on coupe alors l'alimentation en énergie électrique de l'organe de commande de l'aéronef et on désactive cet organe de commande.

En outre, on peut comparer la valeur absolue de la seconde accélération courante de l'aéronef avec un quatrième seuil d'accélération ainsi que la valeur moyenne de la seconde accélération courante de l'aéronef sur un intervalle de temps prédéterminé avec un cinquième seuil d'accélération. On peut alors générer l'ordre de gonflage et le transférer à l'organe de gonflage lorsque, d'une part, la valeur absolue de la seconde accélération courante de l'aéronef est supérieure au quatrième seuil d'accélération et, d'autre part, la valeur moyenne de la seconde accélération courante de l'aéronef sur l'intervalle de temps prédéterminé est supérieure au cinquième seuil d'accélération.

En d'autres termes, tant que la valeur absolue de la seconde accélération courante de l'aéronef est inférieure au quatrième seuil d'accélération on laisse l'organe de commande générer en parallèle des algorithmes de comparaison visant à identifier un dépassement du quatrième seuil d'accélération. Si un dépassement est identifié on compare alors la valeur moyenne de la seconde accélération courante de l'aéronef sur un intervalle de temps prédéterminé avec le cinquième seuil d'accélération et on commande le gonflage de l'airbag si cette valeur moyenne sur l'intervalle de temps prédéterminé est supérieure au cinquième seuil d'accélération.

En pratique, le procédé peut comporter une étape de stockage dans au moins une mémoire des données représentatives des troisième, quatrième et cinquième seuils d'accélération, une telle mémoire faisant partie intégrante de l'organe de commande.

Autrement dit et comme déjà évoqué, on peut alors conserver les données représentatives des troisième, quatrième et cinquième seuils d'accélération entre deux missions ou pendant toute la durée d'utilisation de l'aéronef.

L'invention et ses avantages apparaîtront avec plus de détails dans le cadre de la description qui suit avec des exemples donnés à titre illustratif en référence aux figures annexées qui représentent :
- les figures 1 à 3, des schémas structurels selon trois variantes de dispositifs de commande du gonflage de ballons gonflables, conformément à l'invention,
- la figure 4, une vue partielle de côté d'un aéronef conforme à l'invention, et
- les figures 5 et 6, deux logigrammes illustrant deux procédés de commande du gonflage d'un ballon gonflable, conformément à l'invention.

Les éléments présents dans plusieurs figures distinctes peuvent être affectés d'une seule et même référence.

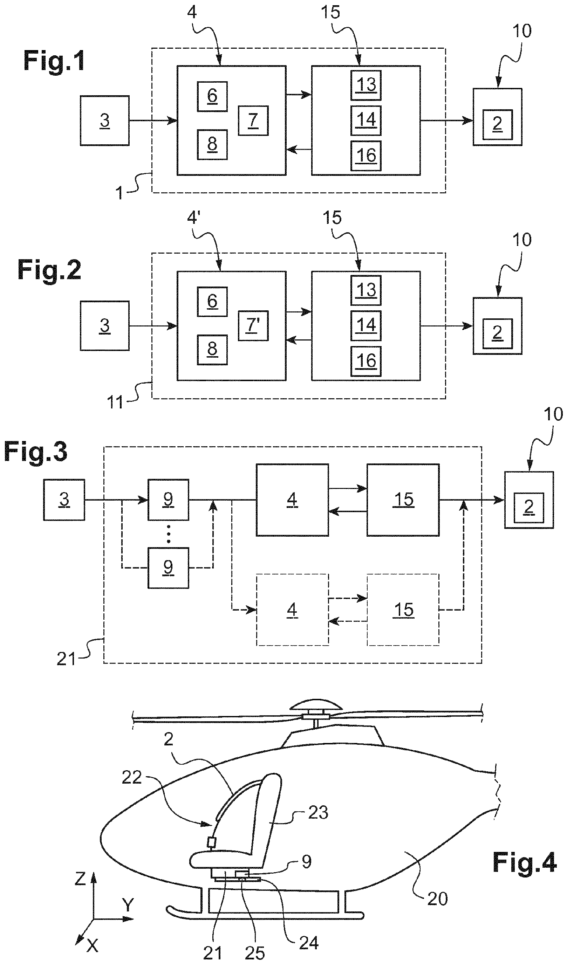

Comme déjà évoqué et tel que représenté à la figure 1, l'invention concerne un dispositif de commande 1 du gonflage d'au moins un ballon gonflable de sécurité 2. Tel que représenté à la figure 4, un tel ballon gonflable ou airbag 2 peut notamment être agencé au niveau d'un harnais de sécurité 22 de siège 23 d'aéronef 20.

Avantageusement, un tel aéronef 20 peut être un avion, un giravion ou encore plus particulièrement, tel que représenté schématiquement à la figure 4, un hélicoptère.

Tout d'abord, trois axes X, Y et Z orthogonaux les uns par rapport aux autres sont représentés sur la figure 4 et permettent de définir le déplacement de l'aéronef en translation selon trois directions ou en rotation autour de trois axes.

Un tel repère orthogonal permet alors de définir l'orientation de l'accélération linaire et de l'accélération angulaire de l'aéronef 20 ou encore le torseur dynamique d'un tel aéronef 20.

Tel que représenté à la figure 1, le dispositif de commande 1 comporte un organe de commande 15 permettant de mesurer une accélération de l'aéronef 20, de générer un ordre gonflage et de le transmettre à un organe de gonflage 10. L'organe de gonflage 10 permet alors de réaliser le gonflage d'un ballon gonflable 2.

Selon cette première variante de l'invention représentée à la figure 1, le dispositif de commande 1 comporte un système d'armement 4 comportant un premier capteur 7 permettant de mesurer constamment une première accélération courante A_{C1} de l'aéronef 20 selon au moins un axe X, Y, Z. Un tel premier capteur 7 peut par exemple être formé par un capteur mécanique permettant de mesurer le déplacement d'une masse mobile en fonction de la première accélération courante A_{C1} de l'aéronef 20.

Le système d'armement 4 comporte également un interrupteur pilotable 6 pour, en fonction de la valeur de la première accélération courante A_{C1}, connecter ou déconnecter l'organe de commande 5 à une source d'énergie électrique 3.

Une telle source d'énergie électrique 3 peut notamment être autonome et dédiée à un siège 23. Cependant, selon d'autres variantes conformes à l'invention, une telle source d'énergie électrique 3 peut également être centralisée et commune à plusieurs dispositifs de commande 1.

Ainsi, tant que la valeur absolue de la première accélération courante A_{C1} reste inférieure à un premier seuil d'accélération S₁, l'interrupteur pilotable 6 reste ouvert.

Cependant, lorsque la valeur absolue de la première accélération courante A_{C1} devient supérieure à un premier seuil d'accélération S₁, l'interrupteur pilotable 6 se ferme pour laisser passer l'énergie électrique jusqu'à l'organe de commande 15

Un tel système d'armement 4 a ainsi pour objet de limiter la consommation en énergie électrique de l'organe de commande 15 en fonction de la valeur absolue de la première accélération courante A_{C1} mesurée par le premier capteur 7.

Selon une autre variante telle que représentée à la figure 2, le dispositif de commande 11 peut comporter un système d'armement 4' comprenant un premier capteur 7' qui, selon cette autre variante, peut par exemple être formé par un capteur choisis parmi le groupe comportant les microsystèmes électromécaniques (MEMs) et les nanosystèmes électromécaniques (NEMs) aptes à mesurer une accélération selon au moins un axe (X), (Y), (Z).

Par ailleurs suivant un mode de réalisation particulier et tel que représenté aux figures 1 et 2, le système d'armement 4, 4' peut également comporter des moyens d'amortissement 8 d'une mesure de la première accélération courante A_{C1}. Ces moyens d'amortissement 8 permettent alors de filtrer une mesure V₁ de la première accélération courante A_{C1}. On peut alors ensuite comparer la valeur absolue de cette mesure V₁ avec le premier seuil d'accélération S₁. Lorsque la mesure V₁ est supérieure, en valeur absolue, au premier seuil d'accélération S₁ on ferme l'interrupteur pilotable 6 pour connecter électriquement la source d'énergie électrique 3 avec l'organe de commande 5.

Tel que représenté aux figures 1 et 2, l'organe de commande 15 comporte notamment un second capteur 13 apte à mesurer, au moins temporairement, une seconde accélération courante A_{C2} de l'aéronef 20 selon au moins un axe X, Y, Z. Un tel second capteur 13 est avantageusement de type miniaturisé tel un MEMs et permet de réaliser une mesure très précise et rapide de la seconde accélération courante A_{C2} de l'aéronef 20.

Dans ce cas, il est alors envisageable d'ouvrir ultérieurement l'interrupteur pilotable 6 pour déconnecter électriquement la source d'énergie électrique 3 avec l'organe de commande 15 lorsque la valeur absolue de la seconde accélération courante A_{C2} devient inférieure à un troisième seuil d'accélération S₃ et reste inférieure à ce troisième seuil d'accélération S₃ pendant un nombre prédéterminé I₁ d'itérations de comparaison i effectuées par un calculateur 14.

En effet, un tel dispositif de commande 1, 11 peut également comporter un calculateur 14 pour comparer itérativement la valeur absolue de la seconde accélération courante A_{C2} de l'aéronef 20 ou sa valeur moyenne A_{C2M} sur un intervalle de temps prédéterminé avec différents seuils d'accélération.

Ainsi, le calculateur 14 permet de comparer la valeur absolue de la seconde accélération courante A_{C2} avec le troisième seuil d'accélération S₃ ou encore avec un quatrième seuil d'accélération S₄. En outre, le dispositif de commande 1, 11 peut générer un ordre de gonflage et transmet cet ordre à l'organe de gonflage 10 lorsque à la fois la valeur absolue de la seconde accélération courante A_{C2} est supérieure au quatrième seuil d'accélération S₄ et la valeur moyenne A_{C2M} de la seconde accélération courante A_{C2} sur un intervalle de temps prédéterminé est supérieure à un cinquième seuil d'accélération S₅.

En outre, le second capteur 13 peut être de type saturé pour ne délivrer une mesure de la seconde accélération courante A_{C2} qu'en dessous d'un sixième seuil d'accélération S₆ choisi supérieur au quatrième seuil d'accélération S₄.

Par ailleurs et tel que représenté, le dispositif de commande 1, 11 peut également comporter une mémoire 16 permettant de stocker des données représentatives des troisième S₃, quatrième S₄ et cinquième S₅ seuils d'accélération.

Tel que représenté à la figure 3 selon une troisième variante, le dispositif de commande 21 peut également comporter un interrupteur de maintenance 9 pour permettre une déconnection manuelle entre la source d'énergie électrique 3 et le système d'armement 4 et/ou l'organe de commande 15 durant des opérations de maintenance de l'aéronef 20.

Par ailleurs, il est également envisageable d'augmenter la sûreté d'un tel dispositif de commande 21 en procédant à des redondances de l'interrupteur de maintenance 9 et/ou du système d'armement 4 et/ou de l'organe de commande 15.

Telle que représentée à la figure 4 et comme déjà évoqué, l'invention concerne également un aéronef 20 tel que par exemple un hélicoptère. Un tel aéronef 20 est alors remarquable en ce qu'il comporte un dispositif de commande 21 du gonflage d'un ballon gonflable 2 équipant par exemple un harnais de sécurité 22 de siège 23.

Un tel dispositif de commande 21 peut notamment comporter un interrupteur de maintenance 9 actionné magnétiquement lors de la mise en place du siège 23 sur un rail de guidage 24 par des moyens magnétiques 25 solidaires du rail de guidage 24.

Ainsi, lorsque le siège 23 est retiré de son rail de guidage 24 pour une opération de maintenance, l'interrupteur de maintenance 9 est éloigné des moyens magnétiques 25 et il ouvre le circuit électrique permettant l'alimentation en énergie électrique du système d'armement 4 et/ou de l'organe de commande 15.

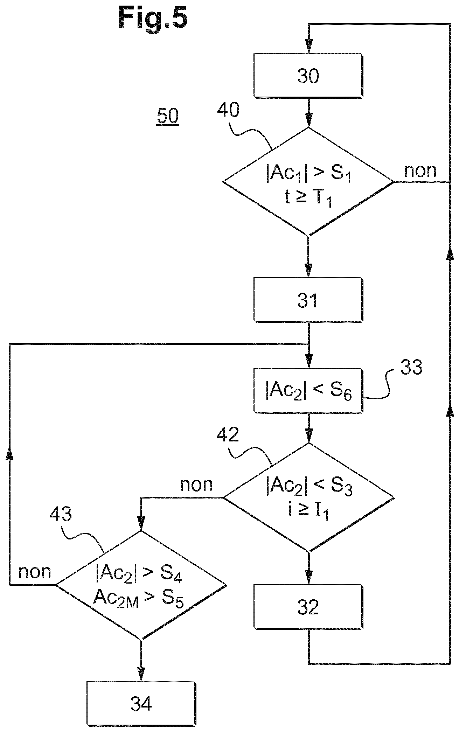

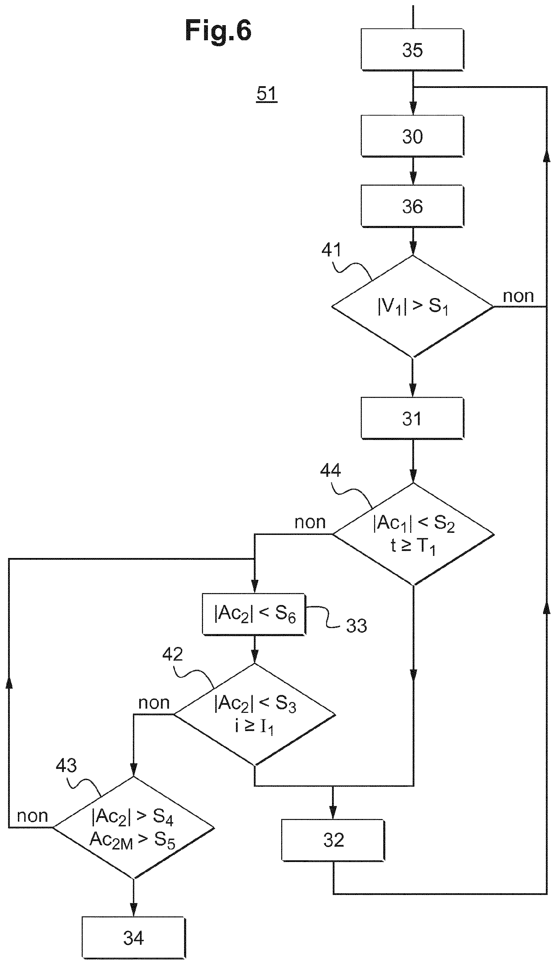

Enfin et telle que représentée aux figures 5 et 6, l'invention concerne également un procédé 50, 51 de commande du gonflage d'un ballon gonflable de sécurité 2.

Ainsi et tel que représenté, le procédé 50, 51 comporte une étape préliminaire de mesure 30 d'une première accélération courante A_{C1} de l'aéronef 20 selon au moins un axe X, Y, Z. Une première étape de comparaison 40 permet alors d'identifier si la première accélération courante A_{C1} de l'aéronef 20 est inférieure ou supérieure à un premier seuil d'accélération S₁.

Tel que représenté à la figure 5, lorsque la valeur absolue de la première accélération courante A_{C1} est supérieure à un premier seuil d'accélération S₁, le procédé 50 active une étape 31 d'activation d'un organe de commande 15 en connectant électriquement une source d'énergie électrique 3 à l'organe de commande 15. Une telle connexion peut ainsi être réalisée au moyen d'un interrupteur pilotable 6 que l'on ferme pour permettre une alimentation en énergie électrique de l'organe de commande 15.

Lorsque la valeur absolue de la première accélération courante A_{C1} est inférieure au premier seuil d'accélération S₁, l'étape préliminaire de mesure 30 mesure alors la première accélération courante A_{C1} de l'aéronef 20 selon au moins un axe X, Y, Z.

Ensuite, le procédé met en oeuvre une étape de mesure 33 d'une seconde accélération courante A_{C2} de l'aéronef 20 au moyen d'un second capteur 13. Un tel second capteur 13 peut par ailleurs être saturée, c'est-à-dire qu'il permet de fournir une mesure limitée à un sixième seuil d'accélération S₆ pour ne pas prendre en compte des accélérations instantanées de valeur absolue très importante. L'étape de mesure 33 permet ainsi de fournir une mesure de la seconde accélération courante A_{C2} de l'aéronef 20 qui est inférieure ou égale au sixième seuil d'accélération S₆.

On compare alors à une étape 42 la valeur absolue de cette seconde accélération courante A_{C2} avec un troisième seuil d'accélération S₃.

Ainsi, si la seconde accélération courante A_{C2} reste inférieure au troisième seuil d'accélération S₃ pendant un nombre prédéterminé I₁ d'itérations de comparaison i, une étape de désactivation 32 de l'organe de commande 15 déconnecte électriquement la source d'énergie électrique 3 de l'organe de commande 15. Une telle déconnexion peut ainsi être réalisée au moyen d'un interrupteur pilotable 6 que l'on ouvre pour empêcher l'alimentation en énergie électrique de l'organe de commande 15.

Une fois l'étape de désactivation 32 réalisée, l'étape préliminaire de mesure 30 mesure alors la première accélération courante A_{C1} de l'aéronef 20 selon au moins un axe X, Y, Z.

Cependant, si la valeur absolue de la seconde accélération courante A_{C2} est supérieure au troisième seuil d'accélération S₃, une étape 43 de comparaison compare à la fois la valeur absolue de la seconde accélération courante A_{C2} à un quatrième seuil d'accélération S₄ et la valeur moyenne A_{C2M} de la seconde accélération courante A_{C2} sur un intervalle de temps prédéterminé à un cinquième seuil d'accélération S₅.

Si la valeur absolue de la seconde accélération courante A_{C2} est supérieure au quatrième seuil d'accélération S₄ et que la valeur moyenne A_{C2M} de la seconde accélération courante A_{C2} sur un intervalle de temps prédéterminé est supérieure au cinquième seuil d'accélération S₅, le procédé 50 active l'étape suivante 34 consistant à générer un ordre de gonflage et transmettre cet ordre de gonflage à l'organe de gonflage 10 du ballon gonflable 2 car l'imminence d'un accident de l'aéronef 20 est identifiée.

Tel que représenté à la figure 6, le procédé 51 de commande du gonflage d'un ballon gonflable 2 peut également comporter une étape de stockage 35 consistant à stocker dans une mémoire 16 des données représentatives des troisième S₃, quatrième S₄ et cinquième S₅ seuils d'accélération. Une telle mémoire 16 fait alors avantageusement partie de l'organe de commande 15.

Dans ce second exemple, le procédé 51 comporte quant à lui une étape de filtrage 36 permettant de filtrer une mesure V₁ de la première accélération courante A_{C1} de l'aéronef 20. Cette étape de filtrage 36 est par ailleurs réalisée par les moyens d'amortissement 8 pour éviter de prendre en compte des variations trop lentes de la première accélération courante A_{C1}.

Une étape de comparaison 41 compare ensuite, en valeur absolue, cette mesure V₁ de la première accélération courante A_{C1} avec le premier seuil d'accélération S₁.

Lorsque la mesure V₁ est inférieure au premier seuil d'accélération S₁, l'étape préliminaire de mesure 30 mesure alors la première accélération courante A_{C1} de l'aéronef 20 selon au moins un axe X, Y, Z.

Par contre, si la mesure V₁ de la première accélération courante A_{C1} est supérieure, en valeur absolue, au premier seuil d'accélération S₁, c'est le signe d'un risque d'accident pour l'aéronef 20. Le procédé 51 active alors une étape d'activation 31 d'un organe de commande 15 en connectant une source d'énergie électrique à l'organe de commande 15.

Par ailleurs, selon cette variante du procédé 51, une fois l'étape d'activation 31 de l'organe de commande 15 réalisée, on a une étape de comparaison 44 de la valeur absolue de la première accélération courante A_{C1} de l'aéronef 20 avec un second seuil d'accélération S₂.

Si la première accélération courante A_{C1} de l'aéronef 20 est inférieure au second seuil d'accélération S₂ pendant une durée prédéterminée T₁, le procédé 51 met en oeuvre une étape de désactivation 32 de l'organe de commande 15. De même que précédemment, une fois l'étape de désactivation 32 réalisée, l'étape préliminaire de mesure 30 mesure alors la première accélération courante A_{C1} de l'aéronef 20 selon au moins un axe X, Y, Z.

Par contre, si la valeur absolue de la première accélération courante A_{C1} de l'aéronef 20 est supérieure au second seuil d'accélération S₂, une étape de mesure 33 mesure alors une seconde accélération courante A_{C2} de l'aéronef 20 au moyen d'un second capteur 14.

Comme pour le procédé 50, le procédé 51 comporte ensuite une étape 42 de comparaison entre cette valeur absolue de la seconde accélération courante A_{C2} et un troisième seuil d'accélération S₃.

La suite du procédé 51 et alors identique à celle du procédé 50 déjà décrit à la figure 5.

Naturellement, la présente invention est sujette à de nombreuses variations quant à sa mise en oeuvre, pourvu qu'elles ne sortent pas du cadre de la présente invention défini par le texte des revendications.

## Revendications

1. Aéronef (20) équipé d'au moins un dispositif de commande (1, 11, 21) comportant au moins un organe de commande (15) permettant de mesurer une accélération dudit aéronef (20), de générer un ordre de gonflage et de transmettre ledit ordre de gonflage à un organe de gonflage (10), ledit organe de gonflage (10) permettant de réaliser un gonflage d'au moins un ballon gonflable de sécurité (2), ledit dispositif de commande (1, 11, 21) ainsi que ledit organe de gonflage (10) et ledit ballon gonflable (2) étant agencés au niveau d'un même siège (23) dudit aéronef (20),
ledit dispositif de commande (1, 11, 21) comportant au moins un système d'armement (4, 4') relié audit au moins un organe de commande (15), ledit système d'armement (4, 4') comportant :
• au moins un premier capteur (7, 7') mesurant en permanence une première accélération courante (A_{C1}) de l'aéronef (20) selon au moins un axe (X), (Y), (Z), ledit au moins un organe de commande (15) fournissant une mesure de l'accélération de l'aéronef (20) indépendante de la première accélération courante (A_{C1}) de l'aéronef (20) mesurée par ledit premier capteur (7, 7'), et
• au moins un interrupteur (6) pilotable en fonction de ladite première accélération courante (A_{C1}) de l'aéronef (20) mesurée par ledit premier capteur (7, 7'), ledit interrupteur pilotable (6) permettant d'activer/de désactiver ledit au moins un organe de commande (15) en connectant/déconnectant électriquement une source d'énergie électrique (3) audit organe de commande (15),
ledit organe de commande (15) comportant au moins un second capteur (13) apte à mesurer, au moins temporairement, une seconde accélération courante (A_{C}2) de l'aéronef (20) selon au moins un axe (X), (Y), (Z), ledit organe de commande (15) comportant au moins un calculateur (14) permettant de comparer la valeur absolue de ladite seconde accélération courante (A_{C2}) de l'aéronef (20) avec un troisième seuil d'accélération (S₃) et de commander l'ouverture dudit interrupteur pilotable (6) pour déconnecter électriquement ladite source d'énergie électrique (3) dudit organe de commande (15) lorsque ladite valeur absolue de ladite seconde accélération courante (A_{C2}) de l'aéronef (20) est inférieure audit troisième seuil d'accélération (S₃) pendant un nombre prédéterminé d'itérations de comparaison (I₁), effectuées par ledit au moins un calculateur (14), entre ladite valeur absolue de ladite seconde accélération courante (A_{C2}) de l'aéronef (20) et ledit troisième seuil d'accélération (S₃).

2. Aéronef selon la revendication 1,
**caractérisé en ce que** ledit interrupteur pilotable (6) connecte électriquement une source d'énergie électrique (3) audit organe de commande (15) lorsque la valeur absolue de ladite première accélération courante (A_{C1}) de l'aéronef (20) devient supérieure à un premier seuil d'accélération (S₁).

3. Aéronef selon la revendication 2,
**caractérisé en ce que** ledit système d'armement (4, 4') comporte des moyens d'amortissement (8) de ladite première accélération courante (A_{C1}) de l'aéronef (20) mesurée par ledit premier capteur (7, 7'), lesdits moyens d'amortissement (8) permettant de filtrer une mesure (V₁) de ladite première accélération courante (A_{C1}) de l'aéronef (20), ledit interrupteur pilotable (6) connectant électriquement ladite source d'énergie électrique (3) audit organe de commande (15) lorsque ladite mesure (V₁) de ladite première accélération courante (A_{C1}) de l'aéronef (20) est supérieure, en valeur absolue, audit premier seuil d'accélération (S₁).

4. Aéronef selon l'une quelconque des revendications 1 à 3,
**caractérisé en ce que** ledit interrupteur pilotable (6) déconnecte électriquement ladite source d'énergie électrique (3) dudit organe de commande (15) lorsque la valeur absolue de ladite première accélération courante (A_{C1}) de l'aéronef (20) est inférieure à un deuxième seuil d'accélération (S₂) pendant une durée prédéterminée (T₁).

5. Aéronef selon la revendication 1,
**caractérisé en ce que** ledit au moins un calculateur (14) compare ladite valeur absolue de ladite seconde accélération courante (A_{C2}) de l'aéronef (20) avec un quatrième seuil d'accélération (S₄) ainsi que la valeur moyenne (A_{C2M}) de la seconde accélération courante (A_{C2}) de l'aéronef (20) sur un intervalle de temps prédéterminé avec un cinquième seuil d'accélération (S₅), ledit calculateur (14) génère ledit ordre de gonflage puis transfère ledit ordre de gonflage à l'organe de gonflage (10) lorsque, d'une part, la valeur absolue de la seconde accélération courante (A_{C2}) de l'aéronef (20) est supérieure au quatrième seuil d'accélération (S₄) et que, d'autre part, la valeur moyenne (A_{C2M}) de ladite seconde accélération courante (A_{C2}) de l'aéronef (20) sur ledit intervalle de temps prédéterminé est supérieure audit cinquième seuil d'accélération (S₅).

6. Aéronef selon l'une quelconque des revendications 1 ou 5,
**caractérisé en ce que** ledit organe de commande (15) comporte au moins une mémoire (16) permettant de stocker au moins des données représentatives desdits troisième (S₃) et/ou quatrième (S₄) et/ou cinquième (S₅) seuils d'accélération.

7. Aéronef selon l'une quelconque des revendications 1 à 6,
**caractérisé en ce que** ledit au moins un premier capteur (7) est formé par un capteur mécanique apte à mesurer une accélération selon au moins un axe (X), (Y), (Z).

8. Aéronef selon l'une quelconque des revendications 1 à 6,
**caractérisé en ce que** ledit au moins un premier capteur (7') et ledit au moins un second capteur (13) sont choisis parmi le groupe comportant les microsystèmes électromécaniques (MEMs) et les nanosystèmes électromécaniques (NEMs) aptes à mesurer une accélération selon au moins un axe (X), (Y), (Z).

9. Aéronef selon la revendication 8,
**caractérisé en ce que** ledit au moins un second capteur (13) est saturé pour mesurer une accélération selon au moins un axe (X), (Y), (Z) uniquement en dessous d'un sixième seuil d'accélération (S₆) choisi supérieur ou égal au quatrième seuil d'accélération (S₄).

10. Procédé de commande (50, 51) du gonflage d'au moins un ballon gonflable de sécurité (2) agencé au niveau d'un siège d'aéronef (23), ledit procédé de commande comportant au moins une étape de mesure (33) consistant à mesurer une accélération de l'aéronef (20) et une étape (34) consistant à générer à un ordre de gonflage et à transmettre ledit ordre de gonflage à un organe de gonflage (10) permettant de réaliser le gonflage ballon gonflable de sécurité (2),
ledit procédé de commande (50, 51) comportant :
• une étape préliminaire de mesure (30) mise en oeuvre par au moins un premier capteur (7, 7'), ladite étape préliminaire de mesure (30) consistant à mesurer en permanence une première accélération courante (A_{C1}) de l'aéronef (20) selon au moins un axe (X), (Y), (Z), ladite étape de mesure (33) fournissant une mesure de l'accélération de l'aéronef (20) indépendante de la première accélération courante (A_{C1}) de l'aéronef (20), et
• une étape d'activation (31) et une étape de désactivation (32) d'un organe de commande (15) permettant de réaliser l'étape (34) consistant à générer un ordre de gonflage et à transmettre cet ordre de gonflage à l'organe de gonflage (10) du ballon gonflable (2), ladite étape d'activation (31) et ladite étape de désactivation (32) étant réalisées en connectant/déconnectant électriquement une source d'énergie électrique (3) audit organe de commande (15),
ladite étape de mesure (33) étant mise en oeuvre via ledit organe de commande (15) et permettant de mesurer, au moins temporairement, une seconde accélération courante (A_{C2}) de l'aéronef (20) selon au moins un axe (X), (Y), (Z), ledit procédé de commande comportant une étape consistant à comparer la valeur absolue de ladite seconde accélération courante (A_{C2}) de l'aéronef (20) avec un troisième seuil d'accélération (S₃) et à commander l'ouverture d'un interrupteur pilotable (6) pour déconnecter électriquement ladite source d'énergie électrique (3) dudit organe de commande (15) lorsque ladite valeur absolue de la seconde accélération courante (A_{C2}) de l'aéronef (20) est inférieure audit troisième seuil d'accélération (S₃) pendant un nombre prédéterminé d'itérations de comparaison (I₁) entre ladite valeur absolue de ladite seconde accélération courante (A_{C2}) de l'aéronef (20) et ledit troisième seuil d'accélération (S₃).

11. Procédé selon la revendication 10,
**caractérisé en ce qu'**on compare la valeur absolue de ladite première accélération courante (A_{C1}) de l'aéronef (20) avec un premier seuil d'accélération (S₁) et on connecte électriquement ladite source d'énergie électrique (3) audit organe de commande (15) lorsque ladite valeur absolue de ladite première accélération courante (A_{C1}) de l'aéronef est supérieure audit premier seuil d'accélération (S₁).

12. Procédé selon l'une quelconque des revendications 10 à 11,
**caractérisé en ce qu'**on filtre une mesure (V₁) de ladite première accélération courante (A_{C1}) de l'aéronef (20), on compare ladite mesure (V₁) avec ledit premier seuil d'accélération (S₁) et on connecte électriquement ladite source d'énergie électrique (3) audit organe de commande (15) lorsque ladite mesure (V₁) est supérieure, en valeur absolue, audit premier seuil d'accélération (S₁).

13. Procédé selon l'une quelconque des revendications 10 à 12,
**caractérisé en ce qu'**on déconnecte électriquement ladite source d'énergie électrique (3) dudit organe de commande (15) lorsque la valeur absolue de ladite première accélération courante (A_{C1}) de l'aéronef (20) est inférieure à un deuxième seuil d'accélération (S₂) pendant une durée prédéterminée (T₁).

14. Procédé selon l'une quelconque des revendications 10 à 13,
**caractérisé en ce qu'**on compare ladite valeur absolue de ladite seconde accélération courante (A_{C2}) de l'aéronef (20) avec un quatrième seuil d'accélération (S₄) ainsi que la valeur moyenne (A_{C2M}) de ladite seconde accélération courante (A_{C2}) de l'aéronef (20) sur un intervalle de temps prédéterminé avec un cinquième seuil d'accélération (S₅), on génère ledit ordre de gonflage puis on transfère ledit ordre de gonflage à l'organe de gonflage (10) lorsque, d'une part, la valeur absolue de ladite seconde accélération courante (A_{C2}) de l'aéronef (20) est supérieure audit quatrième seuil d'accélération (S₄) et, d'autre part, la valeur moyenne (A_{C2M}) de ladite seconde accélération courante (A_{C2}) de l'aéronef (20) sur ledit intervalle de temps prédéterminé est supérieure audit cinquième seuil d'accélération (S₅).

15. Procédé selon l'une quelconque des revendications 10 ou 14,
**caractérisé en ce que** ledit procédé (51) comporte une étape de stockage (35) dans au moins une mémoire (16) des données représentatives desdits troisième (S₃) et/ou quatrième (S₄) et/ou cinquième (S₅) seuils d'accélération, ladite mémoire (16) faisant partie intégrante dudit organe de commande (15).

## Patentansprüche

1. Luftfahrzeug (20), welches mit mindestens einer Steuervorrichtung (1, 11, 21) ausgerüstet ist, die mindestens ein Steuerelement (15) aufweist, das es ermöglicht, eine Beschleunigung des Luftfahrzeugs (20) zu messen, einen Aufblasbefehl zu erzeugen, und diesen Aufblasbefehl an ein Aufblaselement (10) weiterzuleiten, wobei das Aufblaselement (10) es erlaubt, ein Aufblasen mindestens eines aufblasbaren Sicherheitsballons (2) auszuführen, wobei die Steuervorrichtung (1, 11, 21) sowie das Aufblaselement (10) und der aufblasbare Ballon (2) an ein und demselben Sitz (23) des Luftfahrzeugs (20) angeordnet sind,
wobei die Steuervorrichtung (1, 11, 21) mindestens ein Aktivierungssystem (4, 4') aufweist, das mit dem mindestens einen Steuerelement (15) verbunden ist, wobei das Aktivierungssystem (4, 4') aufweist:
• mindestens einen ersten Detektor (7, 7'), der ständig eine erste aktuelle Beschleunigung (A_{C1}) des Luftfahrzeugs (20) entlang mindestens einer Achse (X), (Y), (Z) misst, wobei das mindestens eine Steuerelement (15) eine Beschleunigungsmessung des Luftfahrzeugs (20) liefert, unabhängig von der ersten aktuellen Beschleunigung (A_{C1}) des Luftfahrzeugs (20), die von dem ersten Detektor (7, 7') gemessen wurde, und
• mindestens einen Unterbrecherschalter (6), der in Abhängigkeit von der ersten aktuellen Beschleunigung (A_{C1}) des Luftfahrzeugs (20), gemessen von dem ersten Detektor (7, 7'), steuerbar ist, wobei der steuerbare Unterbrecherschalter (6) es erlaubt, das mindestens eine Steuerelement (15) zu aktivieren/desaktivieren, indem eine elektrische Energiequelle (3) mit dem Steuerelement (15) elektrisch verbunden wird bzw. von diesem getrennt wird, wobei das Steuerelement (15) mindestens einen zweiten Detektor (13) aufweist, der mindestens zeitweise eine zweite aktuelle Beschleunigung (A_{C2}) des Luftfahrzeugs (20) in Richtung mindestens einer Achse (X), (Y), (Z) messen kann,
wobei das Steuerelement (15) mindestens einen Rechner (14) aufweist, der es ermöglicht, den Absolutwert der zweiten aktuellen Beschleunigung (A_{C2}) des Luftfahrzeugs (20) mit einem dritten Beschleunigungsschwellenwert (S₃) zu vergleichen und die Öffnung des steuerbaren Unterbrecherschalters (6) zu befehlen, um die elektrische Energiequelle (3) von dem Steuerelement (15) elektrisch zu trennen, wenn der Absolutwert der zweiten aktuellen Beschleunigung (A_{C2}) des Luftfahrzeugs (20) während einer vorbestimmten Anzahl von von dem mindestens einen Rechner (14) durchgeführten Vergleichswiederholungen (I₁) zwischen dem Absolutwert der zweiten aktuellen Beschleunigung (A_{C2}) des Luftfahrzeugs (20) und dem dritten Beschleunigungsschwellenwert (S₃) kleiner als der dritte Beschleunigungsschwellenwert (S₃) ist.

2. Luftfahrzeug nach Anspruch 1,
**dadurch gekennzeichnet, dass** der steuerbare Unterbrecherschalter (6) eine elektrische Energiequelle (3) mit dem Steuerelement (15) verbindet, wenn der Absolutwert der ersten aktuellen Beschleunigung (A_{C1}) des Luftfahrzeugs (20) größer als ein erster Beschleunigungsschwellenwert (S₁) wird.

3. Luftfahrzeug nach Anspruch 2,
**dadurch gekennzeichnet dass** das Aktivierungssystem (4, 4') Mittel (8) zur Dämpfung der ersten aktuellen Beschleunigung (A_{C1}) des Luftfahrzeugs (20) aufweist, die von dem ersten Detektor (7, 7') gemessen wurde, wobei die Dämpfungsmittel (8) es erlauben, eine Messung (V₁) der ersten aktuellen Beschleunigung (A_{C1}) des Luftfahrzeugs (20) zu filtern, wobei der steuerbare Unterbrecherschalter die elektrische Energiequelle (3) mit dem Steuerelement (15) verbindet, wenn die Messung (V₁) der ersten aktuellen Beschleunigung (A_{C1}) des Luftfahrzeugs (20) im Absolutwert größer ist als der erste Beschleunigungsschwellenwert (S₁).

4. Luftfahrzeug nach einem der Ansprüche 1 bis 3,
**dadurch gekennzeichnet, dass** der steuerbare Unterbrecherschalter (6) die elektrische Energiequelle (3) von dem Steuerelement (15) elektrisch trennt, wenn der Absolutwert der ersten aktuellen Beschleunigung (A_{C1}) des Luftfahrzeugs (20) während einer vorbestimmten Zeitdauer (T₁) kleiner ist als ein zweiter Beschleunigungsschwellenwert (S₂).

5. Luftfahrzeug nach Anspruch 1,
**dadurch gekennzeichnet, dass** der mindestens eine Rechner (14) den Absolutwert der zweiten aktuellen Beschleunigung (A_{C2}) des Luftfahrzeugs (20) mit einem vierten Beschleunigungsschwellenwert (S₄) vergleicht sowie den Mittelwert (A_{C2M}) der zweiten aktuellen Beschleunigung (A_{C2}) des Luftfahrzeugs (20) in einem vorbestimmten Zeitraum mit einem fünften Beschleunigungsschwellenwert (S₅) vergleicht, wobei der Rechner (14) den Aufblasbefehl erzeugt und den Aufblasbefehl an das Aufblaselement (10) weitergibt, wenn einerseits der Absolutwert der zweiten aktuellen Beschleunigung (A_{C2}) des Luftfahrzeugs (20) größer ist als der vierte Beschleunigungsschwellenwert (S₄) und andererseits der Mittelwert (A_{C2M}) der zweiten aktuellen Beschleunigung (A_{C2}) des Luftfahrzeugs (20) in dem vorbestimmten Zeitraum größer als der fünfte Beschleunigungsschwellenwert (S₅) ist.

6. Luftfahrzeug nach einem der Ansprüche 1 oder 5,
**dadurch gekennzeichnet, dass** das Steuerelement (15) mindestens einen Speicher (16) aufweist, der es erlaubt, mindestens repräsentative Daten des dritten (S₃) und/oder vierten (S₄) und/oder fünften (S₅) Beschleunigungsschwellenwerts zu speichern.

7. Luftfahrzeug nach einem der Ansprüche 1 bis 6,
**dadurch gekennzeichnet, dass** der mindestens eine erste Detektor (7) ein mechanischer Detektor ist, der eine Beschleunigung entlang mindestens einer Achse (X), (Y), (Z) messen kann.

8. Luftfahrzeug nach einem der Ansprüche 1 bis 6,
**dadurch gekennzeichnet, dass** der mindestens eine erste Detektor (7') und der mindestens eine zweite Detektor (13) ausgewählt sind aus der Gruppe, die elektromechanische Mikrosysteme (MEMs) und elektromechanische Nanosysteme (NEMs) umfasst, die für die Messung einer Beschleunigung entlang mindestens einer Achse (X), (Y), (Z) geeignet sind.

9. Luftfahrzeug nach Anspruch 8,
**dadurch gekennzeichnet, dass** der mindestens eine zweite Detektor (13) gesättigt ist, um eine Beschleunigung entlang mindestens einer Achse (X), (Y), (Z) nur unterhalb einem sechsten Beschleunigungsschwellenwert (S₆) zu messen, der größer oder gleich dem vierten Beschleunigungsschwellenwert (S₄) gewählt wird.

10. Verfahren zur Steuerung (50, 51) des Aufblasens mindestens eines aufblasbaren Sicherheitsballons (2), der an einem Sitz (23) eines Luftfahrzeugs angebracht ist, wobei das Steuerungsverfahren mindestens einen Schritt (33) einer Messung aufweist, der darin besteht, eine Beschleunigung des Luftfahrzeugs (20) zu messen, und einen Schritt (34), der darin besteht, einen Aufblasbefehl zu erzeugen und diesen Aufblasbefehl an ein Aufblaselement (10) zu leiten, das es erlaubt, das Aufblasen des aufblasbaren Sicherheitsballons (20) durchzuführen, wobei der Steuerungsschritt (50, 51) folgende Schritte aufweist:
• einen vorläufigen Schritt (30) einer Messung, der durchgeführt wird von mindestens einem ersten Detektor (7, 7'), wobei der vorläufige Messschritt (30) darin besteht, ständig eine erste aktuelle Beschleunigung (A_{C1}) des Luftfahrzeugs (20) entlang mindestens einer Achse (X), (Y), (Z) zu messen, wobei der Messschritt (33) eine Messung der Beschleunigung des Luftfahrzeugs (20), unabhängig von der ersten aktuellen Beschleunigung (A_{C1}) des Luftfahrzeugs (20), liefert, und
• einen Schritt der Aktivierung (31) und einen Schritt der Desaktivierung (32) eines Steuerelements (15), das es ermöglicht, einen Schritt (34) auszuführen, der darin besteht, einen Aufblasbefehl zu erzeugen und diesen Aufblasbefehl an ein Aufblaselement (10) des aufblasbaren Ballons (2) zu übermitteln, wobei der Schritt der Aktivierung (31) und der Schritt der Desaktivierung (32) ausgeführt werden, indem eine elektrische Energiequelle (3) mit dem Steuerelement (15) elektrisch verbunden wird bzw. von diesem getrennt wird,
wobei der Messchritt (33) über das Steuerelement (15) ausgeführt wird und es erlaubt, mindestens zeitweise eine zweite aktuelle Beschleunigung (A_{C2}) des Luftfahrzeugs (20) in Richtung mindestens einer Achse (X), (Y), (Z) zu messen,
wobei das Steuerverfahren einen Schritt aufweist, der darin besteht, den Absolutwert der zweiten aktuellen Beschleunigung (A_{C2}) des Luftfahrzeugs (20) mit einem dritten Beschleunigungsschwellenwert (S₃) zu vergleichen und die Öffnung eines steuerbaren Unterbrecherschalters (6) zu befehlen, um die elektrische Energiequelle (3) von dem Steuerelement (15) elektrisch zu trennen, wenn der Absolutwert der zweiten aktuellen Beschleunigung (A_{C2}) des Luftfahrzeugs (20) während einer vorbestimmten Anzahl von Vergleichswiederholungen (I₁) zwischen dem Absolutwert der zweiten aktuellen Beschleunigung (A_{C2}) des Luftfahrzeugs (20) und dem dritten Beschleunigungsschwellenwert (S₃) kleiner als der dritte Beschleunigungsschwellenwert (S₃) ist.

11. Verfahren nach Anspruch 10,
**dadurch gekennzeichnet, dass** man den Absolutwert der ersten aktuellen Beschleunigung (A_{C1}) des Luftfahrzeugs (20) mit einem ersten Beschleunigungsschwellenwert (S₁) vergleicht und die elektrische Energiequelle (3) mit dem Steuerelement (15) elektrisch verbindet, wenn der Absolutwert der ersten aktuellen Beschleunigung (A_{c1}) des Luftfahrzeugs größer als der erste Beschleunigungsschwellenwert (S₁) ist.

12. Verfahren nach einem der Ansprüche 10 bis 11,
**dadurch gekennzeichnet, dass** eine Messung (V₁) der ersten aktuellen Beschleunigung (A_{C1}) des Luftfahrzeugs (20) gefiltert wird, die Messung (V₁) mit dem ersten Beschleunigungsschwellenwert (S₁) verglichen wird, und die elektrische Energiequelle (3) mit dem Steuerelement (15) elektrisch verbunden wird, wenn der Absolutwert der Messung (V₁) größer ist als der erste Beschleunigungsschwellenwert (S₁).

13. Verfahren nach einem der Ansprüche 10 bis 12,
**dadurch gekennzeichnet, dass** die elektrische Energiequelle (3) von dem Steuerelement (15) elektrisch getrennt wird, wenn der Absolutwert der ersten aktuellen Beschleunigung (A_{c1}) des Luftfahrzeugs (20) während einer vorbestimmten Zeitdauer (T₁) kleiner ist als ein zweiter Beschleunigungsschwellenwert (S₂).

14. Verfahren nach einem der Ansprüche 10 bis 13,
**dadurch gekennzeichnet, dass** der Absolutwert der zweiten aktuellen Beschleunigung (A_{c2}) des Luftfahrzeugs (20) mit einem vierten Beschleunigungsschwellenwert (S₄) verglichen wird sowie der Mittelwert (A_{c2M}) der zweiten aktuellen Beschleunigung (A_{C2}) des Luftfahrzeugs (20) in einem vorbestimmten Zeitraum mit einem fünften Beschleunigungsschwellenwert (S₅) verglichen wird, der Aufblasbefehl erzeugt wird, und dieser Aufblasbefehl an das Aufblaselement (10) weitergeleitet wird, wenn einerseits der Absolutwert der zweiten aktuellen Beschleunigung (A_{C2}) des Luftfahrzeugs (20) größer ist als der vierte Beschleunigungsschwellenwert (S₄), und andererseits der Mittelwert (A_{C2M}) der zweiten aktuellen Beschleunigung (A_{C2}) des Luftfahrzeugs (20) in diesem vorbestimmten Zeitraum größer als der fünfte Beschleunigungsschwellenwert (S₅) ist.

15. Verfahren nach einem der Ansprüche 10 oder 14,
**dadurch gekennzeichnet, dass** das Verfahren (51) einen Schritt des Speicherns (35) in mindestens einem Speicher (16) von Daten umfasst, die repräsentativ sind für den dritten (S₃) und/oder vierten (S₄) und/oder fünften (S₅) Beschleunigungsschwellenwert, wobei der Speicher (16) einen integralen Bestandteil des Steuerelements (15) darstellt.

## Claims

1. An aircraft (20) equipped with at least one control device (1, 11, 21) comprising at least one control member (15) that allows measurement of an acceleration of said aircraft (20), generation of an inflation command and transmission of said inflation command to an inflation member (10), said inflation member (10) allowing at least one inflatable safety balloon (2) to be inflated, said control device (1, 11, 21) and said inflation member (10) and said inflatable balloon (2) being located at the same seat (23) of said aircraft (20), said control device (1, 11, 21) comprising at least one arming system (4, 4') that is connected to said at least one control member (15), said arming system (4, 4') comprising:
• at least one first sensor (7, 7') continuously measuring a first current acceleration (A_{C1}) of the aircraft (20) along at least one axis (X), (Y), (Z), said at least one control member (15) supplying a measurement of the acceleration of the aircraft (20) that is independent of the first current acceleration (A_{C1}) of the aircraft (20) measured by said first sensor (7, 7'), and
• at least one switch (6) that is actuable as a function of said first current acceleration (A_{C1}) of the aircraft (20) that is measured by said first sensor (7, 7'), said actuable switch (6) allowing said at least one control member (15) to be activated/deactivated by electrically connecting/disconnecting an electrical energy source (3) to said control member (15),
said control member (15) comprising at least one second sensor (13) that is suitable for measuring, at least temporarily, a second current acceleration (A_{c}2) of the aircraft (20) along at least one axis (X), (Y), (Z),
said control member (15) comprising at least one computer (14) allowing the absolute value of said second current acceleration (A_{C2}) of the aircraft (20) to be compared with a third acceleration threshold (S₃) and opening of said actuable switch (6) to be controlled in order to electrically disconnect said electrical energy source (3) from said control member (15) when said absolute value of said second current acceleration (A_{C2}) of the aircraft (20) is less than said third acceleration threshold (S₃) for a predetermined number of iterations of comparison (I₁) that are carried out by said at least one computer (14), between said absolute value of said second current acceleration (A_{C2}) of the aircraft (20) and said third acceleration threshold (S₃).

2. An aircraft according to Claim 1,
**characterised in that** said actuable switch (6) electrically connects an electrical energy source (3) to said control member (15) when the absolute value of said first current acceleration (A_{C1}) of the aircraft (20) becomes greater than a first acceleration threshold (S₁).

3. An aircraft according to Claim 2,
**characterised in that** said arming system (4, 4') comprises damping means (8) for said first current acceleration (A_{C1}) of the aircraft (20) that is measured by said first sensor (7, 7'), said damping means (8) allowing a measurement (V₁) of said first current acceleration (A_{C1}) of the aircraft (20) to be filtered, said actuable switch (6) electrically connecting said electrical energy source (3) to said control member (15) when said measurement (V₁) of said first current acceleration (A_{C1}) of the aircraft (20) is greater, in terms of the absolute value, than said first acceleration threshold (S₁).

4. An aircraft according to any one of Claims 1 to 3,
**characterised in that** said actuable switch (6) electrically disconnects said electrical energy source (3) from said control member (15) when the absolute value of said first current acceleration (A_{C1}) of the aircraft (20) is less than a second acceleration threshold (S₂) for a predetermined period (T₁).

5. An aircraft according to Claim 1,
**characterised in that** said at least one computer (14) compares said absolute value of said second current acceleration (A_{C2}) of the aircraft (20) with a fourth acceleration threshold (S₄) and the average value (A_{C2M}) of the second current acceleration (A_{C2}) of the aircraft (20) over a predetermined period of time with a fifth acceleration threshold (S₅), said computer (14) generates said inflation command and then sends said inflation command to the inflation member (10) when, on the one hand, the absolute value of the second current acceleration (A_{C2}) of the aircraft (20) is greater than the fourth acceleration threshold (S₄) and, on the other hand, the average value (A_{C2M}) of said second current acceleration (A_{C2}) of the aircraft (20) over said predetermined period of time is greater than said fifth acceleration threshold (S₅).

6. An aircraft according to any one of Claims 1 or 5,
**characterised in that** said control member (15) comprises at least one memory (15) allowing at least data representing said third (S₃) and/or fourth (S₄) and/or fifth (S₅) acceleration thresholds to be stored.

7. An aircraft according to any one of Claims 1 to 6,
**characterised in that** said at least one first sensor (7) is formed by a mechanical sensor suitable for measuring an acceleration along at least one axis (X), (Y), (Z).

8. An aircraft according to any one of Claims 1 to 6,
**characterised in that** said at least one first sensor (7') and said at least one second sensor (13) are selected from the group comprising microelectromechanical systems (MEMs) and nanoelectromechanical systems (NEMs) that are suitable for measuring an acceleration along at least one axis (X), (Y), (Z).

9. An aircraft according to Claim 8,
**characterised in that** said at least one second sensor (13) is saturated in order to measure an acceleration along at least one axis (X), (Y), (Z) only below a sixth acceleration threshold (S₆) that is selected to be greater than or equal to the fourth acceleration threshold (S₄).

10. A control method (50, 51) for the inflation of at least one inflatable safety balloon (2) located at an aircraft seat (23), said control method comprising at least a measuring step (33) consisting in measuring an acceleration of the aircraft (20) and a step (34) consisting in generating an inflation command and transmitting said inflation command to an inflation member (10) allowing the inflatable safety balloon (2) to be inflated,
said control method (50, 51) comprising:
• a preliminary measuring step (30) performed by at least one first sensor (7, 7'), said preliminary measuring step (30) consisting in continuously measuring a first current acceleration (A_{C1}) of the aircraft (20) along at least one axis (X), (Y), (Z), said measuring step (33) supplying a measurement of the acceleration of the aircraft (20) that is independent of the first current acceleration (A_{C1}) of the aircraft (20), and
• an activation step (31) and a deactivation step (32) of a control member (15) allowing the step (34) consisting in generating an inflation command and transmitting this inflation command to the inflation member (10) of the inflatable balloon (2) to be performed, said activation step (31) and said deactivation step (32) being formed by electrically connecting/disconnecting an electrical energy source (3) to said control member (15),
said measuring step (33) being implemented by way of said control member (15) and allowing a second current acceleration (A_{C2}) of the aircraft (20) to be measured, at least temporarily, along at least one axis (X), (Y), (Z),
said control method comprising a step consisting in comparing the absolute value of said second current acceleration (A_{C2}) of the aircraft (20) with a third acceleration threshold (S₃) and in controlling opening of an actuable switch (6) in order to electrically disconnect said electrical energy source (3) from said control member (15) when said absolute value of the second current acceleration (A_{C2}) of the aircraft (20) is less than said third acceleration threshold (S₃) for a predetermined number of iterations of comparison (I₁) between said absolute value of said second current acceleration (A_{C2}) of the aircraft (20) and said third acceleration threshold (S₃).

11. A method according to Claim 10,
**characterised in that** the absolute value of said first current acceleration (A_{C1}) of the aircraft (20) is compared with a first acceleration threshold (S₁), and said electrical energy source (3) is electrically connected to said control member (15) when said absolute value of said first current acceleration (A_{C1}) of the aircraft is greater than said first acceleration threshold (S₁).

12. A method according to any one of Claims 10 to 11,
**characterised in that** a measurement (V₁) of said first current acceleration (A_{C1}) of the aircraft (20) is filtered, said measurement (V₁) is compared with said first acceleration threshold (S₁), and said electrical energy source (3) is electrically connected to said control member (15) when said measurement (V₁) is greater, in terms of the absolute value, than said first acceleration threshold (S₁).

13. A method according to any one of Claims 10 to 12,
**characterised in that** said electrical energy source (3) is electrically disconnected from said control member (15) when the absolute value of said first current acceleration (A_{C1}) of the aircraft (20) is less then a second acceleration threshold (S₂) for a predetermined period (T₁).

14. A method according to any one of Claims 10 to 13,
**characterised in that** said absolute value of said second current acceleration (A_{C2}) of the aircraft (20) is compared with a fourth acceleration threshold (S₄) and the average value (A_{C2M}) of said second current acceleration (A_{C2}) of the aircraft (20) over a predetermined period of time is compared with a fifth acceleration threshold (S₅), said inflation command is generated and then said inflation command is sent to the inflation member (10) when, on the one hand, the absolute value of said second current acceleration (A_{C2}) of the aircraft (20) is greater than said fourth acceleration threshold (S₄) and, on the other hand, the average value (A_{C2M}) of said second current acceleration (A_{C2}) of the aircraft (20) over said predetermined period of time is greater than said fifth acceleration threshold (S₅).

15. A method according to any one of Claims 10 or 14,
**characterised in that** said method (51) comprises a step of storing (35) in at least one memory (16) data representing said third (S₃) and/or fourth (S₄) and/or fifth (S₅) acceleration thresholds, said memory (16) forming an integral part of said control member (15).
